Europäisches Patentamt

European Patent Office

Office européen des brevets

Veröffentlichungsnummer: **0 279 181**

**A1**

# EUROPÄISCHE PATENTANMELDUNG

(21) Anmeldenummer: 88100565.6

(22) Anmeldetag: 16.01.88

(51) Int. Cl.⁴: **B60R 21/00**

(30) Priorität: 30.01.87 DE 3702825

(43) Veröffentlichungstag der Anmeldung:
**24.08.88 Patentblatt 88/34**

(84) Benannte Vertragsstaaten:
**DE FR GB IT SE**

(71) Anmelder: **Bayerische Motoren Werke
Aktiengesellschaft
BMW-Haus Postfach 40 02 40 Petuelring 130
- AJ-33
D-8000 München 40(DE)**

(72) Erfinder: **Schemperg, Lutz
Bingener Strasse 11
D-8000 München 50(DE)**
Erfinder: **Haberl, Josef
Jupiterweg 7
D-8011 Aschheim(DE)**
Erfinder: **Wintershoff, Werner
Landsberger Strasse 431
D-8000 München 60(DE)**
Erfinder: **Heiden, Ulrich
August-Horch-Strasse 20
D-8000 München 50(DE)**
Erfinder: **Bauernfeind, Olaf
Tristanstrasse 12
D-8034 Germering(DE)**
Erfinder: **Rüger, Bernhard
Tüllesamstrasse 7
D-8000 München 45(DE)**

(74) Vertreter: **Bullwein, Fritz
Bayerische Motoren Werke
Aktiengesellschaft Postfach 40 02 40
Petuelring 130 AJ-33
D-8000 München 40(DE)**

(54) **Rückhaltesystem für Kraftfahrzeuge.**

(57) Bei einem Rückhaltesystem für Kraftfahrzeuge mit einem Airbag und einem Beschleunigungssensor mit zwei Beschleunigungsniveaus, der die Aktivierung des Airbags steuert, ist dem Fahrzeuginsassen auch ein Sicherheitsgurt zugeordnet und der Airbag bei Erreichen des einzigen maßgeblichen Beschleunigungsniveaus vollständig aktiviert. Dieses Beschleunigungsniveau liegt bei nicht angelegtem Sicherheitsgurt niedrig und bei angelegtem Sicherheitsgurt hoch. Auf diese Weise wird der Airbag nur dann aktiviert, wenn dies unbedingt erforderlich ist.

Dies hängt wiederum davon ab, wie hoch das Beschleunigungsniveau ist und ob der Sicherheitsgurt angelegt ist.

Die Erfindung bezieht sich auf ein Rückhaltesystem für Kraftfahrzeuge nach dem Oberbegriff des Patentanspruchs 1.

Ein derartiges System ist aus der DE-OS 27 45 620 bekannt. Dabei ist den Beschleunigungsniveaus des Beschleunigungssensors jeweils eine Aktivierungsstufe des Airbags zugeordnet. Wird nur das niedrigere Beschleunigungsniveau erreicht, wird der Airbag nur teilweise aufgeblasen. Nur wenn das höhere Beschleunigungsniveau erreicht wird, wird der Airbag vollständig aktiviert. Selbst wenn der Airbag nur teilweise aufgeblasen wird, d.h. das höhere Beschleunigungsniveau nicht erreicht wird, ist anschließend ein Austausch des Airbags erforderlich. Dieser Vorgang ist kostenintensiv. Dies wiegt um so schwerer, da die Aktivierung des Airbags insbesondere bei nur relativ leichten Unfällen nicht erforderlich ist. Bei derartigen Unfällen wird in der Regel zwar das erste Beschleunigungsniveau, jedoch nicht das zweite Beschleunigungsniveau erreicht.

Der Erfindung liegt die Aufgabe zugrunde, ein Rückhaltesystem der eingangs genannten Art zu schaffen, bei dem die Aktivierung des Airbags nur dann erfolgt, wenn dies erforderlich ist.

Die Erfindung löst diese Aufgabe durch die kennzeichnenden Merkmale des Patentanspruchs 1.

Allein durch den ohnehin in der Regel vorhandenen Sicherheitsgurt wird, wenn er angelegt ist, der Fahrzeuginsasse bei relativ leichten Unfällen sicher vor Verletzungen bewahrt. Ist der Sicherheitsgurt hingegen nicht angelegt, so schützt der dann bereits bei relativ leichten Unfällen vollständig aktivierte Airbag sicher vor Schäden. Bei schweren Unfällen, bei denen das zweite Beschleunigungsniveau erreicht wird, ist die Wirkung des Sicherheitsgurts in der Regel nicht mehr ausreichend. In diesem Fall sorgt der Airbag für den Schutz des Fahrzeuginsassen. Dies erfolgt unabhängig davon, ob der Sicherheitsgurt angelegt ist oder nicht.

Das Anlegen des Sicherheitsgurts kann auf besonders einfache Weise mit Hilfe eines Schalters erkannt werden, der durch die Gurtzunge aktiviert ist. Auf diese Weise kann ohne Zutun des Fahrzeuginsassen die Aktivierung des Airbags situationsgerecht vorgenommen werden.

Eine weitere Verbesserung der Erfindung im Sinne einer bedarfsgerechten Aktivierung des Airbags wird erreicht durch einen weiteren Schalter, der die Besetzung eines Fahrzeugsitzes anzeigt. Nur dann, wenn der jeweilige Fahrzeugsitz besetzt ist, wird im Bedarfsfall der Airbag ausgelöst. Damit werden völlig unnötige Auslösungen mit Sicherheit ausgeschlossen.

Eine weitere Verbesserung der Erfindung beschäftigt sich mit der Diagnose von Rückhaltesystemen, die aus einem oder mehreren Airbags mit Auslösung in der beschriebenen Form abhängig von der Benutzung des Sicherheitsgurts bzw. dem erreichten Beschleunigungsniveau aktiviert sind. Insbesondere soll der Fall berücksichtigt werden, daß das Kraftfahrzeug mit einer variablen Anzahl derart aktivierter Airbags ausgerüstet ist. Um in diesem Fall die Diagnose des Rückhaltesystems unabhängig von der tatsächlichen Zahl von Airbags durchführen zu können, besteht die Weiterbildung der Erfindung darin, daß die Aktivierungs-Stromkreise mehrerer ( = n) Airbags bzw. Airbagstufen parallel geschaltet sind und daß der elektrische Widerstand der Stromkreise untereinander gleich und gleich dem n-fachen Basiswert ist, wobei der Basiswert gleich dem Wert bei insgesamt nur einem Stromkreis ist. Auf diese Weise wird es möglich, die allein von dem maßgeblichen einzigen Beschleunigungsniveau abhängige Aktivierung des Airbags sicherzustellen, da durch die Diagnose die Funktionsbereitschaft der hierzu vorgesehenen Stromkreise überprüft und gewährleistet wird.

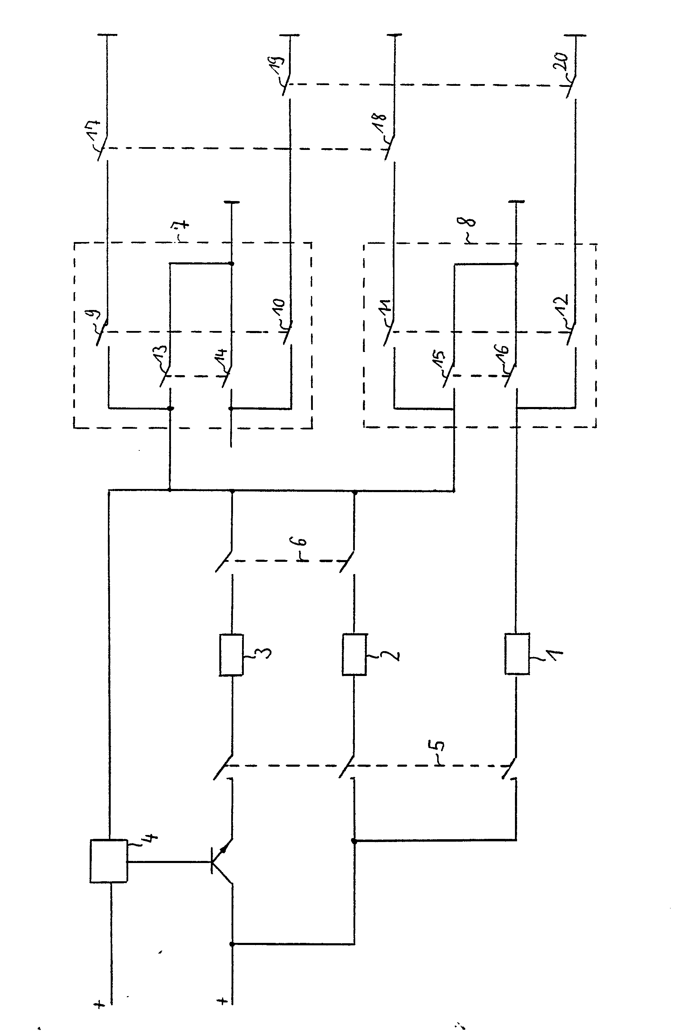

In der Zeichnung ist ein Ausführungsbeispiel der Erfindung dargestellt.

In der einzigen Figur ist eine Schaltung gezeigt, die bei einem Kraftfahrzeug mit einem Airbag auf der Fahrerseite und einem Airbag auf der Beifahrerseite die Aktivierung des Airbags steuert. Der nicht im einzelnen dargestellte Airbag auf der Fahrerseite wird durch eine Zündpille 1, der Airbag auf der Beifahrerseite durch zwei Zündpillen 2 und 3 aktiviert. Dabei ist die Aktivierung der Zündpille 3 durch ein Verzögerungsglied 4 um beispielsweise 15 msec verzögert gegenüber der gleichzeitigen Aktivierung der Zündpillen 1 und 2. In Reihe mit den Zündpillen 1 bis 3 liegt ein sog. Safing-Sensor 5, der bei relativ geringen Beschleunigungen je einen Schalter in Reihe mit den Zündpillen schließt und der dazu dient, eine Fehlauslösung der Zündpillen 1 bis 3 aufgrund eines schaltungstechnischen Fehlers oder dgl. zu verhindern.

In Reihe mit den Zündpillen 2 und 3 für den Beifahrer-Airbag liegt jeweils ein Schaltglied eines Doppelschalters 6, der bei besetztem Beifahrersitz geschlossen und bei nicht besetztem Beifahrersitz geöffnet ist.

Die Aktivierung der Zündpillen 1 bis 3 erfolgt mit Hilfe zweier Beschleunigungssensoren 7 bzw. 8, die frontseitig angeordnet sind. Beide Beschleunigungssensoren 7 bzw. 8 reagieren auf zwei maßgebliche Beschleunigungsniveaus. Bei einem niedrigen Beschleunigungsniveau sind jeweils zwei Schaltglieder 9 und 10 bzw. 11 und 12 geschlossen. Dieses Beschleunigungsniveau wird bei einem Crash mit einer Geschwindigkeit von mindestens etwa 15 km/h erreicht. Bei einem darüber liegenden höheren Beschleunigungsniveau sind zwei weitere Schaltglieder 13 und 14 bzw. 15 und 16 geschlossen. In Reihe mit den Schaltgliedern 9 und 11 liegt ein Schaltglied 17 bzw. 18 eines Doppelschalters, in Reihe mit den Schaltgliedern 10 bzw. 11 ein Schaltglied 19 bzw. 20 eines weiteren Doppelschalters. Der erste Doppelschalter 17,18 ist bei angelegtem Sicherheitsgurt auf der Beifahrerseite, der zweite Schalter bei angelegtem Gurt auf der Fahrerseite offen und entsprechend bei nicht angelegtem Gurt geschlossen.

Bei einem anormalen Unfall, der mit einer starken negativen Beschleunigung des Kraftfahrzeugs einhergeht, werden abhängig von der maximal auftretenden Beschleunigung und dem Anlegezustand des Sicherheitsgurts die Airbags auf der Fahrer- bzw. Beifahrerseite im Bedarfsfall aktiviert. Ist auf der Fahrer- bzw. auf der Beifahrerseite der Sicherheitsgurt angelegt und sind damit die Schaltglieder 17 und 18 bzw. 19 und 20 offen, so werden die Airbags nur dann aktiviert, wenn das höhere Beschleunigungsniveau erreicht wird. Nur bei diesem Beschleunigungsniveau werden die Schaltglieder 13 und 14 bzw. 15 und 16 in den beiden Beschleunigungssensoren 7 und 8 geschlossen. Dieses Niveau wird in der Regel dann erreicht, wenn die Geschwindigkeit des Kraftfahrzeugs vor dem Unfall über 30 bis 40 kmh liegt. Es werden dann die Zündpillen 1 für den fahrerseitigen Airbag und 2,3 für den beifahrerseitigen Airbag gezündet. Letzteres geschieht jedoch nur dann, wenn der Beifahrersitz auch tatsächlich besetzt ist, da nur dann die Schaltglieder des Doppelschalters 6 geschlossen sind. In diesem Fall wird auch das gleichzeitig mit dem Aktivieren der Zündpillen 1 und 2 eingeschaltete Verzögerungsglied 4 wirksam und - schaltet die zweite Zündpille 3 für den Beifahrer-Airbag um die genannte Verzögerungszeit später durch.

Ist jedoch auf der Fahrer-und/oder Beifahrerseite der Sicherheitsgurt nicht angelegt, so ist der zugeordnete Doppelschalter mit den Schaltgliedern 17 und 18 bzw. 19 und 20 geschlossen. In diesem Fall wird das Aktivieren der Zündpillen 1 bis 3 mit Hilfe der Schaltglieder 9 und 10 bzw. 11 und 12 gesteuert. Diese werden bereits bei dem niedrigeren Beschleunigungsniveau, das bei vorausgehenden Geschwindigkeiten von mindestens 15 km/h erreicht wird, aktiviert. Auch hier wird der Airbag auf der Beifahrerseite nur dann aktiviert, wenn der Beifahrersitz tatsächlich besetzt ist.

Mit Hilfe der den Sicherheitsgurten auf der Fahrer-und Beifahrerseite zugeordneten Schaltern mit den Schaltgliedern 17 und 18 bzw. 19 und 20 wird die Aktivierung des jeweiligen Airbags abhängig vom erreichten Beschleunigungsniveau und abhängig davon aktiviert, ob der Sicherheitsgurt auch tatsächlich angelegt ist. Die Aktivierung des Airbags auf Fahrer-und Beifahrerseite erfolgt bei unterschiedlichem Beschleunigungsniveau, wenn auf der einen Seite der Sicherheitsgurt angelegt und auf der anderen Seite der Sicherheitsgurt nicht angelegt ist. Der nur bei besetztem Beifahrersitz geschlossene Doppelschalter 6 verhindert ein unnötiges Aktivieren des Airbags auf der Beifahrerseite, wenn der Beifahrersitz nicht besetzt ist.

Das dargestellte Schaltschema ist beliebig erweiterbar, es kann beispielsweise auch dann angewandt werden, wenn weitere Airbagvarianten z.B. im Fond oder nach der Seite vorgesehen sind. In diesem Fall ist lediglich eine entsprechende Anzahl von Zündpillen in der dargestellten Weise vorzusehen. Auch hier kann für den jeweiligen Sitz ein Sitzkennungsschalter entsprechend dem Doppelschalter 6 vorgesehen sein, die Auslösung ggf. vorhandener zweier Zündpillen für einen Airbag kann mit Hilfe des Verzögerungsglieds 4 verzögert erfolgen. Die Auslösung jedes mit ein oder zwei Zündpillen versehenen Airbags kann, wie dargestellt, abhängig vom erreichten Beschleunigungsniveau vorgenommen werden.

Zur Vereinheitlichung der Diagnose von Rückhaltesystemen, die mit n Zündpillen - im dargestellten Fall n = 3, ausgerüstet sind, ist der Widerstand der Zündpillen abhängig von der Gesamtzahl der vorhandenen Zündpillen gewählt. Im dargestellten Fall mit drei Zündpillen ist der Widerstand der Zündpillen jeweils untereinander gleich und dreimal so groß wie in dem Fall, in dem lediglich eine einzige Zündpille für einen einzigen Airbag vorgesehen ist. Die Gleichheit der Widerstände der verwendeten Zündpillen ist in jedem Fall vorgesehen.

Es sind beispielsweise sieben Zündpillen, z.B. für die beiden Fondsitze jeweils ein Airbag mit zwei Zündpillen vorgesehen, so ist der Widerstand jeder der sieben Zündpillen siebenmal so groß wie in dem genannten Fall, bei dem nur eine einzige Zündpille innerhalb des Rückhaltesystems Verwendung findet. In sämtlichen Fällen ist der Gesamtwiderstand der Anordnung gleich dem Widerstand, der bei einer Anordnung mit nur einer Zündpille mit entsprechend geringem Widerstand vorliegt. Es ist somit ein einheitliches Diagnosesystem unabhängig von der Zahl der verwendeten Zündpillen bzw. vorgesehenen Airbags verwendbar.

**Ansprüche**

1. Rückhaltesystem für Kraftfahrzeuge mit je einem Airbag für einen Fahrzeuginsassen und einem Beschleunigungssensor mit zwei Beschleunigungsniveaus, der die Aktivierung des Airbags steuert, dadurch gekennzeichnet, daß dem Fahrzeuginsassen auch ein Sicherheitsgurt zugeordnet ist, daß der Airbag bei Erreichen nur eines jeweils maßgeblichen Beschleunigungsniveaus vollständig aktiviert ist und daß das niedrige Beschleunigungsniveau bei nicht angelegtem Sicherheitsgurt und das hohe Beschleunigungsniveau bei angelegtem Sicherheitsgurt maßgeblich ist.

2. Rückhaltesystem nach Anspruch 1, dadurch gekennzeichnet, daß das Anlegen des Sicherheitsgurts mittels eines von der Gurtzunge betätigten Schalters feststellbar ist.

3. Rückhaltesystem nach Anspruch 1 oder 2, gekennzeichnet durch einen weiteren Schalter, der bei besetztem Fahrzeugsitz betätigt ist und der die Aktivierung des jeweiligen Airbags bei nicht besetztem Fahrzeugsitz verhindert.

4. Rückhaltesystem nach einem der Ansprüche 1 bis 3, dadurch gekennzeichnet, daß die Aktivierungs-Stromkreise mehrerer ($=n$) Airbags bzw. Airbagstufen parallel geschaltet sind und daß der elektrische Widerstand der Stromkreise untereinander gleich und gleich dem n-fachen Basiswert ist, wobei der Basiswert gleich dem Wert bei insgesamt nur einem Stromkreis ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 413 768 (DAIMLER BENZ AG) * Patentanspruch 1 * | 1 | B 60 R 21/00 |
| A | --- | 2-4 | |
| A | US-A-3 718 332 (JONES) * Patentanspruch 1 * --- | 1 | |
| D,A | DE-A-2 745 620 (DAIMLER BENZ AG) * Seite 2, Zeilen 3-13 * --- | 1 | |
| A | DE-A-2 516 185 (NISSAN MOTOR CO.) * Patentanspruch 1; Figuren 1,2 * ----- | 1,3 | |

**RECHERCHIERTE SACHGEBIETE (Int. Cl.4)**

B 60 R

Der vorliegende Recherchenbericht wurde für alle Patentansprüche erstellt

| Recherchenort | Abschlußdatum der Recherche | Prüfer |
|---|---|---|
| DEN HAAG | 13-05-1988 | MAUSSER,T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument